# EUROPEAN PATENT SPECIFICATION

(11) **EP 4 272 924 B1**
(45) Date of publication and mention of the grant of the patent: **25.11.2026**
(21) Application number: 23198662.1
(22) Date of filing: 21.09.2020
(51) Int. Cl.: B29C 45/77, B29C 45/82

(54) **STABILIZED ADAPTIVE HYDRAULIC SYSTEM PRESSURE IN AN INJECTION MOLDING SYSTEM**
STABILISIERTER ADAPTIVER HYDRAULISCHER SYSTEMDRUCK IN EINEM SPRITZGIESSSYSTEM
PRESSION DE SYSTÈME HYDRAULIQUE ADAPTATIF STABILISÉE DANS UN SYSTÈME DE MOULAGE PAR INJECTION

(30) Priority: 04.10.2019 US 201962910546 P
(43) Date of publication of application: 08.11.2023
(62) Document number(s) of the earlier application(s) in accordance with Art. 76 EPC: 20870959.2 / 4 037 887
(73) Proprietor: Husky Injection Molding Systems Ltd., Bolton, ON L7E 5S5 (CA)
(72) Inventor: YU, Weichun, Bolton L7E 2Y9 (CA); SCHULTZ, Gregory Allan, Bolton L7E 2G4 (CA)
(74) Representative: HGF

(56) References cited:
- EP-A1- 2 769 821
- US-A- 5 817 258
- US-A1- 2015 037 448

## Description

### BACKGROUND

In hydraulic systems, including, for example, an injection molding system, it is desirable to minimize the consumption of energy. The energy consumed in a hydraulic system is a function of various characteristics of the system, such that altering one or more of these characteristics will alter the energy consumed.

Specifically, it is well known that the power required by a hydraulic system can be defined as the hydraulic fluid pressure times its volumetric flow rate. The volumetric flow rate, in turn, can be defined as the hydraulic fluid flow cross-sectional area times the flow velocity.

In an injection molding system, the flow rate inputs of flow cross-sectional area and flow velocity (in other words, size and speed) correspond to those properties of the actuator. Thus, an injection molding system's hydraulic power can be defined as the system pressure times the actuator cross-sectional area times the actuator speed. In order to reduce the consumption of energy, one or more of these three parameters-system pressure, actuator area, and actuator speed-must be reduced. Because an injection molding system has fixed actuator sizes, it is not feasible to reduce their size during operation of the injection molding system. And while the actuator speed can be reduced, this is not desirable because actuator speed and system output are directly correlated, so reducing speed would reduce output.

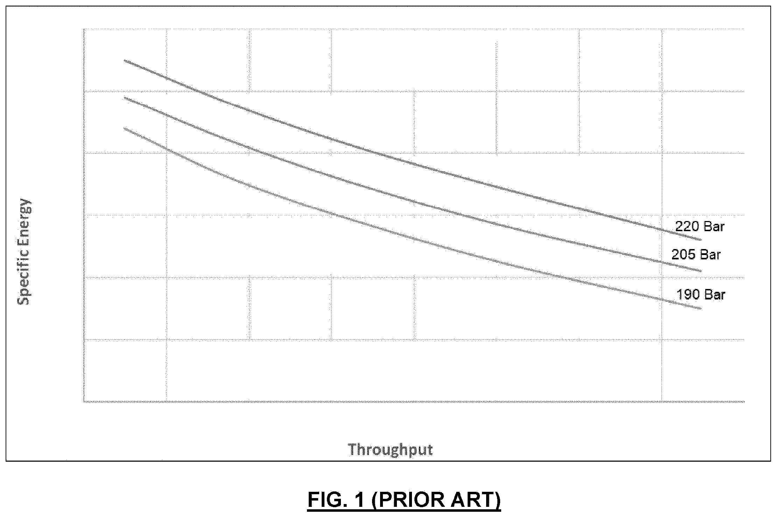

Thus, to reduce energy consumption while maintaining output, the most feasible option is to reduce system pressure. FIG. 1 is a graph that illustrates the relationship between system pressure, energy, and output in injection molding systems generally. As system pressure is reduced in an injection molding system, the specific energy consumed at a given quantity of output is also reduced.

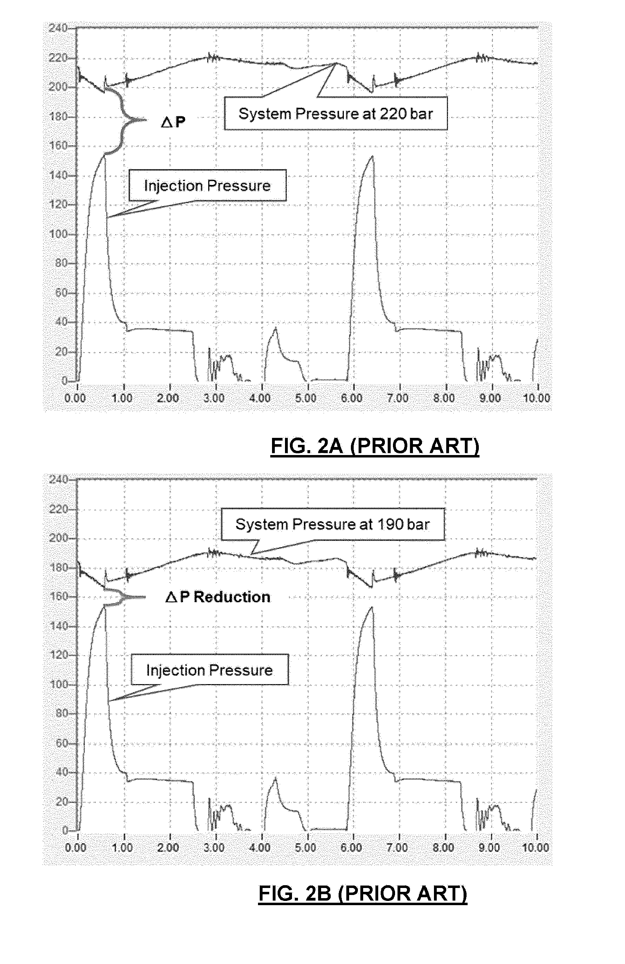

A hydraulic system may be designed to operate over a number of process cycles, and various functions may take place during each cycle. In an injection molding system, these functions may relate to, at a high level, clamping of the mold, injection of plastic material, cooling of the injected plastic, and ejection of the molded part. More specifically, such functions may include, for example, and among others, mold closing, clamp-up, injection fill, injection hold, unclamp, mold opening, ejector-forward, ejector-back, transfer, packing, and carriage. These functions have different pressure requirements, so within an injection molding system cycle, the pressure necessary to perform these functions may have largely fluctuating values. For a given function, the required pressure may also vary at different components of the injection molding system-for example, the pressures at the pump(s), accumulator(s), clamp supply, and injection supply may have different values. In order for the injection molding system to operate, its system pressure must have a value at least as great as the greatest required value of component pressure in a cycle. However, to the extent the system pressure is greater than the greatest required value of component pressure, this surplus represents excess energy that was unnecessarily consumed. FIGS. 2A and 2B are graphs that illustrate this surplus in system pressure for injection supply in an injection molding system. The system pressure is reduced in this example from 220 bar in FIG. 2A to 190 bar in FIG. 2B, reducing the surplus system pressure over the peak component pressure, and thereby reducing the energy consumed by the system.

Examples of known injection molding systems and components thereof are disclosed in WO 2010/144993, US 2015/0037448 A1, US 5817258 and EP 2769821 including via additional references disclosed therein. More specifically, US2015037448A1 discloses a system which monitors operating conditions and adjusts hydraulic pressure during production operation using sensor feedback to provide adaptive pressure control based on pressure setpoints. US5817258A discloses hydraulic pressure regulation using monitored hydraulic conditions and controller-based pressure management. EP2769821A1 discloses reducing hydraulic operating pressure in an injection molding system to improve energy efficiency while monitoring machine operating parameters.

### SUMMARY OF THE INVENTION

The invention provides a process of a controller on a hydraulic system used as part of an injection molding system, as defined by claim 1, and an injection molding system, as defined by claim 12.

An example provides an injection molding system configured to operate in a plurality of cycles. The system comprises a pump assembly, a proportional pump control valve operatively connected to the pump assembly, a sensor and a controller. The proportional pump control valve is configured to provide a variable pressure setpoint of the injection molding system equal to a magnitude of pressure of hydraulic fluid within the proportional pump control valve. The sensor is configured to detect the magnitude of pressure hydraulic fluid within the proportional pump control valve and to send a signal to the controller representative of the variable pressure setpoint. The controller is configured to control a flowrate of hydraulic fluid flowing out of the proportional pump control valve. The variable pressure setpoint is configured to change based on the flowrate of hydraulic fluid flowing out of the proportional pump control valve. The controller is configured to perform a comparison of the variable pressure setpoint with a target pressure value. Upon performing the comparison of the variable pressure setpoint with the target pressure value, the controller is configured to, when the target pressure value is less than the variable pressure setpoint by at least a predetermined lower bound, (i) decrease the variable pressure setpoint to a reduced variable pressure setpoint and (ii) not further decrease the variable pressure setpoint from the reduced variable pressure setpoint until the pump assembly operates for a plurality of stabilizing cycles at the reduced variable pressure setpoint.

Other features of the present invention are identified in the claims.

Other features of the non-limiting embodiments may now become apparent to those skilled in the art upon review of the following detailed description of the non-limiting embodiments with the accompanying drawings.

### DETAILED DESCRIPTIONS OF THE DRAWINGS

The non-limiting embodiments may be more fully appreciated by reference to the following detailed descriptions of the non-limiting embodiments, when taken in conjunction with the accompanying drawings, in which:
FIG. 1 depicts a graph showing specific energy as a function of system pressure and output;
FIG. 2A depicts a graph showing injection pressure and system pressure over time;
FIG. 2B depicts a graph showing injection pressure and a lower system pressure over time;
FIG. 3 depicts an example of an injection molding system;
FIG. 4 depicts a first example of a hydraulic circuit;
FIG. 5 depicts a second example of a hydraulic circuit;
FIG. 6 depicts a flowchart of an example process of the controller on the hydraulic system; and
FIG. 7 depicts a graph showing the variable pressure setpoint value over number of completed cycles.

The drawings are not necessarily to scale and may be illustrated by phantom lines, diagrammatic representations and fragmentary views. In certain instances, details not necessary for an understanding of the embodiments (and/or details that render other details difficult to perceive) may have been omitted.

### DETAILED DESCRIPTION OF THE NON-LIMITING EMBODIMENTS

The invention is set out in the appended claims.

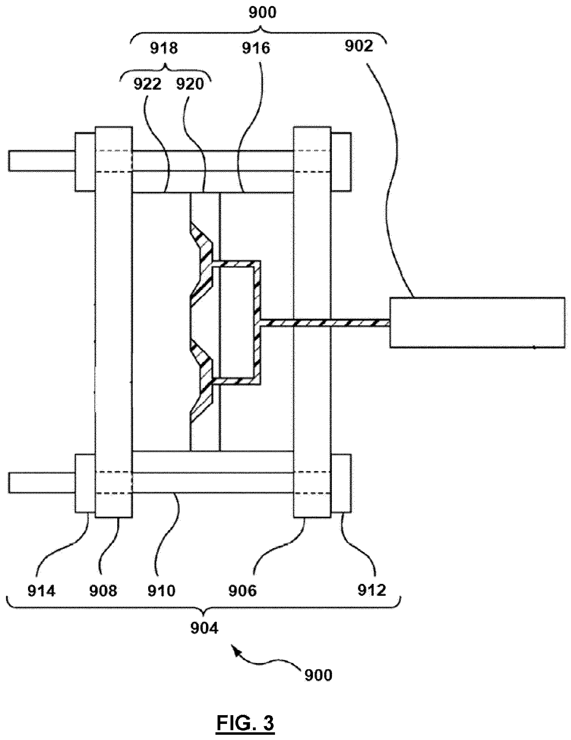

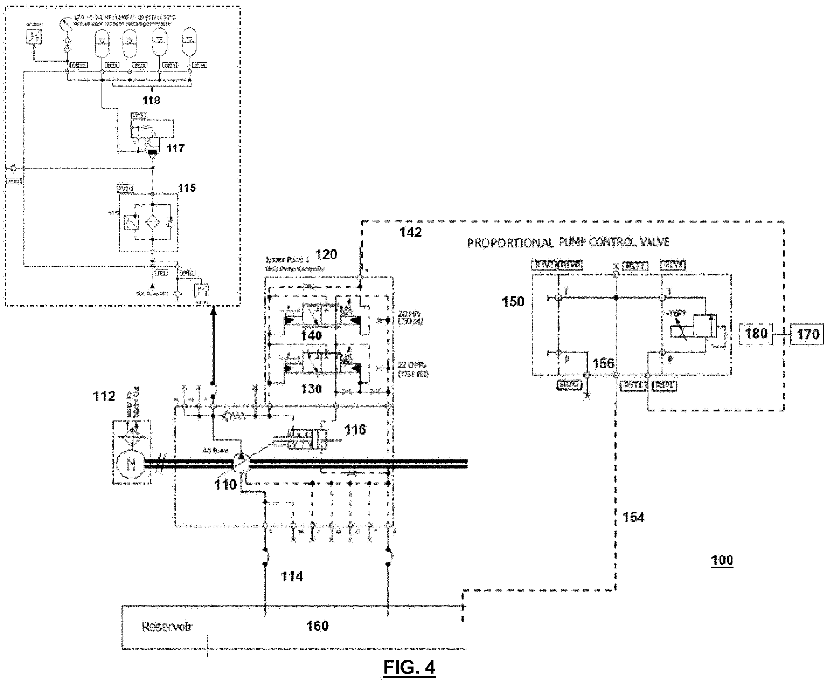

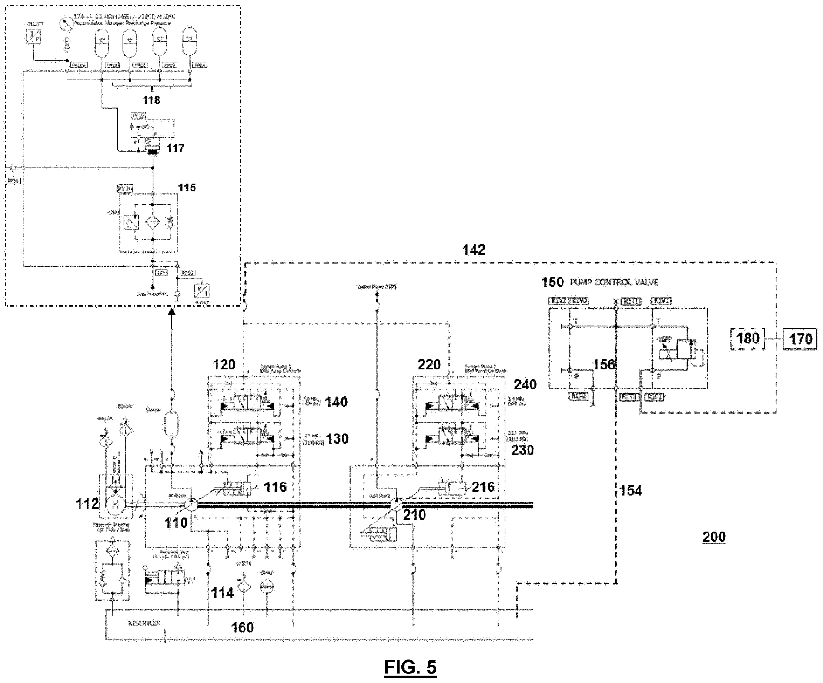

Referring now to FIG. 3, an example of an injection molding system 900 is shown. The molding system 900 is configured to support and to use a hydraulic circuit of the present invention, including the examples of FIGS. 4 and 5. Other aspects and components of the injection molding system 900 may be known and may include those disclosed in WO 2010/144993 and US 2015/0037448 A1, including the references disclosed therein. For example, aspects of the injection molding system 900 depicted in FIG. 3 are described in US 2015/0037448 A1. According to the example of FIG. 3, the injection molding system 900 includes (and is not limited to) an extruder assembly, a clamp assembly, a runner system, and/or a mold assembly 918. By way of example, the extruder assembly 902 is configured to prepare, in use, a heated, flowable resin, and is also configured to inject or to move the resin from the extruder assembly 902 toward the runner system 916. Other names for the extruder assembly 902 may include "injection unit," "melt-preparation assembly," etc. By way of example, the clamp assembly 904 includes (and is not limited to): a stationary platen 906, a movable platen 908, a rod assembly 910, a clamping assembly 912, and/or a lock assembly 914. The stationary platen 906 does not move; that is, the stationary platen 906 may be fixedly positioned relative to the ground or floor. The movable platen 908 is configured to be movable relative to the stationary platen 906. A platen-moving mechanism (not depicted but known) is connected to the movable platen 908, and the platen-moving mechanism is configured to move, in use, the movable platen 908. The rod assembly 910 extends between the movable platen 908 and the stationary platen 906. The rod assembly 910 may have, by way of example, four rod structures positioned at the corners of the respective stationary platen 906 and the movable platen 908. The rod assembly 910 is configured to link the movable platen 908 to the stationary platen 906. A clamping assembly 912 is connected to the rod assembly 910. The stationary platen 906 is configured to support (or configured to position) the position of the clamping assembly 912. The lock assembly 914 is connected to the rod assembly 910, or may alternatively be connected to the movable platen 908. The lock assembly 914 is configured to selectively lock and unlock the rod assembly 910 relative to the movable platen 908. By way of example, the runner system 916 is attached to, or is supported by, the stationary platen 906. The runner system 916 is configured to receive the resin from the extruder assembly 902. By way of example, the mold assembly 918 includes (and is not limited to): a mold-cavity assembly 920 and a mold-core assembly 922 that is movable relative to the mold-cavity assembly 920. The mold-core assembly 922 is attached to or supported by the movable platen 908. The mold-cavity assembly 920 is attached to or supported by the runner system 916, so that the mold-core assembly 922 faces the mold-cavity assembly 920. The runner system 916 is configured to distribute the resin from the extruder assembly 902 to the mold assembly 918.

**In** operation, the movable platen 908 is moved toward the stationary platen 906 so that the mold-cavity assembly 920 is closed against the mold-core assembly 922, so that the mold assembly 918 may define a mold cavity configured to receive the resin from the runner system 916. The lock assembly 914 is engaged so as to lock the position of the movable platen 908 so that the movable platen 908 no longer moves relative to the stationary platen 906. The clamping assembly 912 is then engaged to apply a clamping pressure, in use, to the rod assembly 910, so that the clamping pressure then may be transferred to the mold assembly 918. The extruder assembly 902 pushes or injects, in use, the resin to the runner system 916, which then the runner system 916 distributes the resin to the mold cavity structure defined by the mold assembly 918. Once the resin in the mold assembly 918 is solidified, the clamping assembly 912 is deactivated so as to remove the clamping force from the mold assembly 918, and then the lock assembly 914 is deactivated to permit movement of the movable platen 908 away from the stationary platen 906, and then a molded article may be removed from the mold assembly 918.

It will be appreciated that the injection molding system 900 may include more than two platens. According to an example, the injection molding system 900 includes (and is not limited to) a third platen (not depicted), which is also called a "clamping platen" that is known in the art and thus is not described here in greater detail.

Referring now to FIG. 4, a schematic for a hydraulic circuit is shown at 100. The hydraulic circuit 100 is configured to actuate one or more functions of the injection molding system 900, for example, mold closing, clamp-up, injection fill. According to the example of FIG. 4, the hydraulic circuit 100 includes a pump assembly 110, a motor assembly 112, a pump actuator assembly 116, a hydraulic fluid filter 115, an accumulator check valve 117, one or more accumulator assemblies 118, a pump compensator valve assembly 120, a proportional pump control valve 150, a reservoir 160, and a controller 170.

The pump assembly 110 is configured to pump hydraulic fluid from the reservoir 160 to other components of the hydraulic circuit 100. In the presently illustrated embodiment, the pump assembly 110 is a variable displacement piston pump, although it is not particularly limited and can include both fixed and variable displacement pumps, as is known to those skilled in the art. The pump assembly 110 is operatively connected to motor assembly 112, to the reservoir 160, and to one or more accumulator assemblies 118. The pump assembly 110 is also operatively connected to, and configured to be controlled by a valve. For example, 150 Control Valve is configured to control the pump assembly 110 by changing its displacement. Alternatively if so equipped the pump can be controlled with a variable speed motor, the RPM can be controlled, or both RPM and displacement can be controlled.

The motor assembly 112 is configured to actuate movement of the pump assembly 110. In the presently illustrated embodiment, the motor assembly 112 is a fixed-RPM motor, although it is not particularly limited and can include variable RPM motors or servo motors. The motor assembly 112 is operatively connected to, and configured to be controlled by, the drive. For example, the servo drive or variable frequency drive is configured to control the motor assembly 120 by changing its rpm, or torque limits.

The one or more accumulator assemblies 118 are configured to store hydraulic fluid under pressure generated by the pump assembly 110. The one or more accumulator assemblies 118 are operatively connected to the pump assembly 110 via the accumulator check valve 117 and the hydraulic fluid filter 115. The accumulator check valve 117 is configured to prevent the one or more accumulator assemblies 118 from discharging through the hydraulic fluid filter 115 and the pump assembly 110 while the motor assembly 112 is not in operation. The hydraulic fluid filter 115 is configured to filter the hydraulic fluid flowing to one or more accumulator assemblies 118.

The pump compensator valve assembly 120 is configured to control the flow of hydraulic fluid to the actuator assembly 116 and to the proportional pump control valve 150 while the hydraulic fluid pressure has a value that is outside of preset setpoints. The pump compensator valve assembly 120 is operatively connected to the pump assembly 110, to the actuator assembly 116, and to the proportional pump control valve 150. The pump compensator valve assembly 120 includes a maximum pump compensator valve 130 and a minimum pump compensator valve 140. The maximum pump compensator valve 130 is configured to provide a preset maximum pressure setpoint of the injection molding system 900, and the minimum pump compensator valve 140 is configured to provide a preset minimum pressure setpoint of the injection molding system 900. In an example embodiment, the preset maximum pressure setpoint is 230 bar and the preset minimum pressure setpoint is 20 bar. In an example embodiment, each of the maximum pump compensator valve 130 and the minimum pump compensator valve 140 includes a set screw that is configured to be adjusted prior to operation of the injection molding system 900; adjustment of the set screw changes the value of the spring force applied by the corresponding pump compensator valve and thus its preset pressure setpoint. The pump assembly 110 is configured to destroke when the hydraulic fluid pressure reaches the preset maximum pressure setpoint, such that this pressure value is maintained. In particular, when the system pressure (i) is below the minimum the valve 140 directs flow to the reservoir 160 through control valve 150, causing the pump to go to maximum displacement, (ii) crosses the minimum threshold, (iii) crosses the maximum threshold, and (iv) is above the maximum the valve 130 blocks flow to the reservoir 160 and through control valve 150, causing the pump to go to minimum displacement.

The actuator assembly 116 is configured to impart a force to the pumps internal swashplate. The force is used, for example, to change the displacement of the pump assembly 110.

The proportional pump control valve 150 is configured to provide a variable pressure setpoint of the injection molding system 900, within the end limits of valves 130 and 140, and thereby control the system pressure of the injection molding system 900. The proportional pump control valve 150 is operatively connected to the reservoir 160. In the presently illustrated embodiment, the proportional pump control valve 150 is operatively connected to the reservoir 160 via a supply line 154. The proportional pump control valve 150 is operatively connected to a sensor 180. The sensor 180 is configured to detect pressure within the proportional pump control valve 150 and to send a signal representative of the pressure detected by the sensor 180 to the controller 170. In the presently illustrated embodiment, the sensor 180 is a transducer. The proportional pump control valve 150 is operatively connected to, and configured to be controlled by, the controller 170. For example, the controller 170 is configured to send a voltage signal to the proportional pump control valve 150. The proportional pump control valve 150 is configured to, upon receipt of the voltage signal, permit flow of hydraulic fluid to the reservoir 160, and thereby provide a variable pressure setpoint that is lower than the preset maximum pressure setpoint. In an example embodiment, the proportional pump control valve 150 is a variable displacement valve, whereby the voltage signal sent by the controller 170 governs the position of a spool within the proportional pump control valve 150, thereby causing the orifice of the proportional pump control valve 150 to change in size depending on the voltage signal, such that hydraulic fluid flows at changing flowrates-or not at all-along the supply line 154 to the reservoir 160. In this manner, changes in the size of the orifice of the proportional pump control valve 150 change pressure of the hydraulic fluid flowing through the proportional pump control valve 150, thus changing the variable pressure setpoint and ultimately changing the system pressure. The reservoir 160 is configured to be a source of and receptacle for hydraulic fluid. The hydraulic circuit 100 is thus configured to perform the following operation. When the motor assembly 112 operates to actuate movement of the pump assembly 110, the pump assembly 110 pumps hydraulic fluid from the reservoir 160 to the pump compensator valve assembly 120 and in turn to the actuator assembly 116 and the proportional pump control valve 150. The pump assembly 110 also pumps hydraulic fluid to the one or more accumulator assemblies 118. With the presence of the voltage signal from the controller 170 to the proportional pump control valve 150, the hydraulic fluid is restricted or not permitted to flow from the proportional pump control valve 150 to the reservoir 160, and thus flows to the actuator assembly 116. If there is no voltage signal the valve 150 will not restrict the oil flow and the "orifice" will be at maximum size. The pressure in the pump control circuit will decrease. If the minimum pressure setting of control valve 140 is reached, control valve 140 will close or restrict the oil flow into hose 142 diverting flow to actuator 116 in attempt to increase the displacement and increase the pump pressure above the minimum setpoint. As the pump assembly 110 continues to pump hydraulic fluid within the hydraulic circuit 100, the pressure of the hydraulic fluid-corresponding to the system pressure of the injection molding system 900-will continue to increase. In the event of a failure of the proportional pump control valve 150 or the controller 170, the maximum pressure compensator valve 130 governs, and the system pressure will rise until it equals the preset maximum pressure setpoint. In normal operation, the proportional pump control valve 150 governs, and the system pressure will rise until it equals the variable pressure setpoint, as determined based on the voltage signal sent by the controller 170. Depending on one or more system parameters, the voltage signal will change during operation, resulting in corresponding changes to the variable pressure setpoint and hence achieving adaptive system pressure. Referring now to FIG. 5, a schematic for a hydraulic circuit according to another embodiment is shown at 200. The hydraulic circuit 200 is configured to actuate one or more functions of the injection molding system 900. According to the example of FIG. 5, the hydraulic circuit 200 includes a first pump assembly 110, a first actuator assembly 116, a first pump compensator valve assembly 120, a second pump assembly 210, a second actuator assembly 216, a second pump compensator valve assembly 220, a motor assembly 112, a hydraulic fluid filter 115, an accumulator check valve 117, one or more accumulator assemblies 118, a proportional pump control valve 150, a reservoir 160, and a controller 170.

It will be appreciated that, in accordance with the teachings herein, the injection molding system 900 may also be adapted to utilize three pump assemblies working with the proportional pump control valve 150. In accordance with the teachings herein, the injection molding system 900 may also be adapted to utilize an even greater number of pump assemblies by increasing the size/output/capacity of the proportional pump control valve 150 or quantity of proportional pump control valves, to ensure enough hydraulic fluid can flow to the reservoir 160.

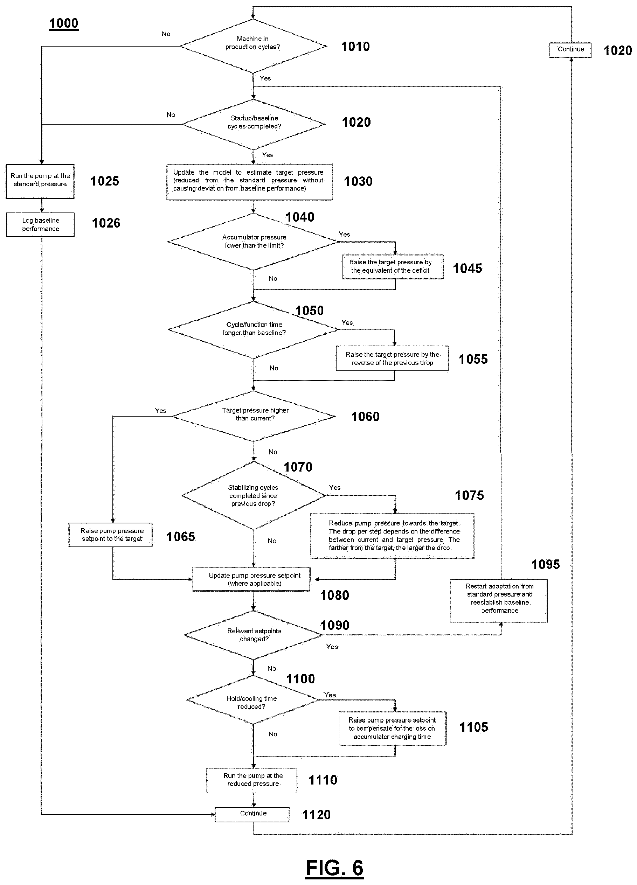

Referring now to FIG. 6, a flowchart of an example process of the controller 170 on the molding system 900 is shown at 1000.

At step 1010, the controller 170 checks whether the injection molding system 900 is in production cycles. Production cycles are in contrast to other cycle modes such as dry cycle when the injection unit is not engaged and no parts are made even though mold are being closed and opened in each cycle. Dry cycle is sometimes called empty cycle. Production cycles are sometimes called normal cycles. For example, the injection molding system 900 may be deemed not in production cycles if it is in any of the following modes: idle, calibration, mold set, manual, dry cycle, factory test, semi, ejector boosters active, and mold vent cleaning cycles. If yes, the process 1000 moves to step 1020. If no, the process 1000 moves to step 1025.

At step 1020, the controller 170 checks whether a predetermined number of baseline cycles have been completed. The first cycle after auto start is counted as 1, any subsequent cycle will increase the count by one. "Auto Start" means the start of production cycle mode. If the predefined number is 10, the predefined number of cycles are completed when the count reaches 10. As further discussed below, the baseline cycles may be performed both in connection with startup of the process 1000 and in further iterations of the process 1000 when restarting pressure adaptation. If yes, the process 1000 moves to step 1030. If no, the process 1000 moves to step 1025.

At step 1025, the pump assembly 110 operates for the predetermined number of baseline cycles at a predetermined standard pressure value. The so predetermined standard pressure is set by the controller 170 and needs to be in the range between the minimum limit set by valve 140 and maximum limit set by valve 130. In separate example embodiments, the predetermined number of baseline cycles is 10 cycles and 20 cycles, although a different predetermined number of baseline cycles may be selected in accordance with the present invention. The process 1000 then moves to step 1026.

At step 1026, the controller 170 determines and logs the baseline performance of the injection molding system 900. The baseline performance refers to one or more functions of the injection molding system 900, and can include the time durations of the following functions, among others: mold closing, mold opening, clamp-up, unclamp, and/or ejector-forward. The baseline performance is determined based on measurements from one or more sensors associated with the functions, such as transducers. Baseline performance in the current implementation is regarding motion time specifically, although it can expand to any other criteria. The process 1000 then moves to step 1120.

At step 1030, the controller 170 determines and sets a target pressure value. The target pressure value is less than the predetermined standard pressure value but not small enough to result in a deviation from the baseline performance determined at step 1026. **In** an example embodiment, the controller 170 sets the target pressure value to the highest value among the lower limits of pressure value imposed by one or more functions of the injection molding system 900. These functions may include, for example, the functions measured during step 1026. **In** an example embodiment, the lower limits of pressure value are determined using measurement and mathematical modeling. That is, for any given function, the lower limit of pressure value for that function can be determined based on measurement of its mechanical characteristics, mathematical modeling of its mechanical characteristics, or both, where the lower limit is the greater of the pressure value determined from the measurements or model. The mechanical characteristics of a function that can be measured include force, pressure, acceleration, and velocity, and physical characteristics associated with the function, including mass and area, can be used with the function's mechanical characteristics to determine its lower limit of pressure. Mathematical models can be used, for example, for functions that are sufficiently fast or dynamic so as to limit the accuracy of measurements, for the purpose of estimate the minimum pressure required to deliver performance of those functions. The process 1000 then moves to step 1040.

At step 1040, the controller 170 checks whether the pressure of the one or more accumulator assemblies 118 is lower than a predetermined accumulator pressure limit. In separate example embodiments, the predetermined accumulator pressure limit is 170 bar and 174 bar, although a different predetermined accumulator pressure limit may be selected in accordance with the present invention. If yes, the process 1000 moves to step 1045. If no, the process 1000 moves to step 1050.

At step 1045, the controller 170 increases the variable pressure setpoint by an amount equal to the difference between the pressure of the one or more accumulator assemblies 118 and the predetermined accumulator pressure limit. The process 1000 then moves to step 1050.

At step 1050, the controller 170 checks whether the cycle/function time duration is longer than the corresponding baseline time duration determined at step 1026. If yes, the process 1000 moves to step 1055. If no, the process 1000 moves to step 1060.

At step 1055, the controller 170 increases the target pressure value to the value of the setpoint before the most recent drop in step 1075. The process then moves to step 1060.

At step 1060, the controller 170 checks whether the target pressure value is greater than the variable pressure setpoint of the injection molding system 900. If yes, the process 1000 moves to step 1065. If no, the process moves to step 1070.

At step 1065, the controller 170 increases the variable pressure setpoint to the target pressure value. In an example embodiment, the controller 170 does so by causing the proportional pump control valve 150 to decrease the flowrate of hydraulic fluid to the reservoir 160. The process then moves to step 1080.

At step 1070, the controller 170 checks whether a predetermined number of stabilizing cycles have been completed since the most recent decrease in the variable pressure setpoint. For the purposes of step 1070, in the cycle immediately after the predetermined number of baseline cycles have been completed, the predetermined number of stabilizing cycles are deemed to have been completed since the most recent decrease in target pressure. Since the number of base line cycles is chosen to be larger than the number of stabilizing cycles, there is no need to repeat the number of stabilizing cycles immediately after the baseline cycles. In an example embodiment, the predetermined number of stabilizing cycles is 5 cycles, although a different predetermined number of stabilizing cycles may be selected in accordance with the present invention. If yes, the process 1000 moves to step 1075. If no, the process 1000 moves to step 1080.

At step 1075, the controller 170 decreases the variable pressure setpoint to a value approaching the target pressure value. In an example embodiment, the controller 170 does so by causing the proportional pump control valve 150 to increase the flowrate of hydraulic fluid to the reservoir 160. In an example embodiment, the decrease in the variable pressure setpoint is equal, or approximately equal, to a predetermined percentage of the difference between the variable pressure setpoint and the target pressure value. In an example embodiment, the decrease in the variable pressure setpoint is also limited such that it is within, or approximately within, a predetermined bound of pressure values. For example, the predetermined percentage may be 61.8%, and the predetermined bound may be 1 bar to 10 bar, inclusive, although a different predetermined percentage and/or predetermined bound of pressure values may be selected in accordance with the present invention. In this example, if the decrease in the variable pressure setpoint would be greater than the upper bound, it is limited to the upper bound, while if the decrease in the variable pressure setpoint would be less than the lower bound, it does not take place, and instead there is no change in the variable pressure setpoint. The process 1000 then moves to step 1080.

At step 1080, the controller 170 sets an updated value of the variable pressure setpoint, when applicable. The process 1000 then moves to step 1090.

At step 1090, the controller 170 checks whether relevant setpoints have been changed. As non-limiting examples, the relevant setpoints may be changeable by an operator of the injection molding system 900 and include but not limited the following setpoints: mold open position, mold closing speed, clamp tonnage, injection fill rate, etc. If yes, the process 1000 then moves to step 1095. If no, the process 1000 then moves to step 1100.

At step 1095, the controller 170 causes the injection molding system 900 to restart pressure adaptation and reestablish baseline performance. For example, it does so by treating the predetermined number of baseline cycles not to have been completed. The process 1000 then moves to step 1020.

At step 1100, the controller 170 checks whether the hold/cooling time has decreased. If yes, the process 1000 moves to step 1105. If no, the process 1000 moves to step 1110. Hold time and cooling time are user setpoints on HMI and the controller keeps tracking if they are changed by the user. The controller records the event, amount, and the direction (increase or decrease) of the change.

At step 1105, the controller 170 increases the variable pressure setpoint to compensate for the decrease in accumulator pressure charging time duration. Accumulator pressure charging typically occurs during the injection-hold and injection-cooling functions, in which oil consumption is at a minimum. If the accumulator charging time duration decreases, then the pressure of the one or more accumulator assemblies 118 will decrease and may be unable to support remaining functions of the current cycle, such as unclamp and mold-opening. In an example embodiment, the compensation for the decrease in accumulator charging time duration is performed using the accumulator pressure charging rate that is calibrated in a state of minimum oil consumption. For example, the state of minimum oil consumption can include the clamp-up and injection hold functions and exclude the transfer and packing functions. In an example embodiment, the controller 170 increases the variable pressure setpoint by causing the proportional pump control valve 150 to decrease the flowrate of hydraulic fluid to the reservoir 160. The process 1000 then moves to step 1110.

At step 1110, the pump assembly 110 operates at the reduced pressure. The process 1000 then moves to step 1120. At step 1110, the pump assembly 110 operates for all cycles except for those cycles or modes that are subject to conditions in 1025.

At step 1120, the process 1000 continues and moves to step 1010.

As exemplified by example process 1000, the injection molding system 900 can operate to adapt the system pressure of the injection molding system 900 based on one or more inputs of the system.

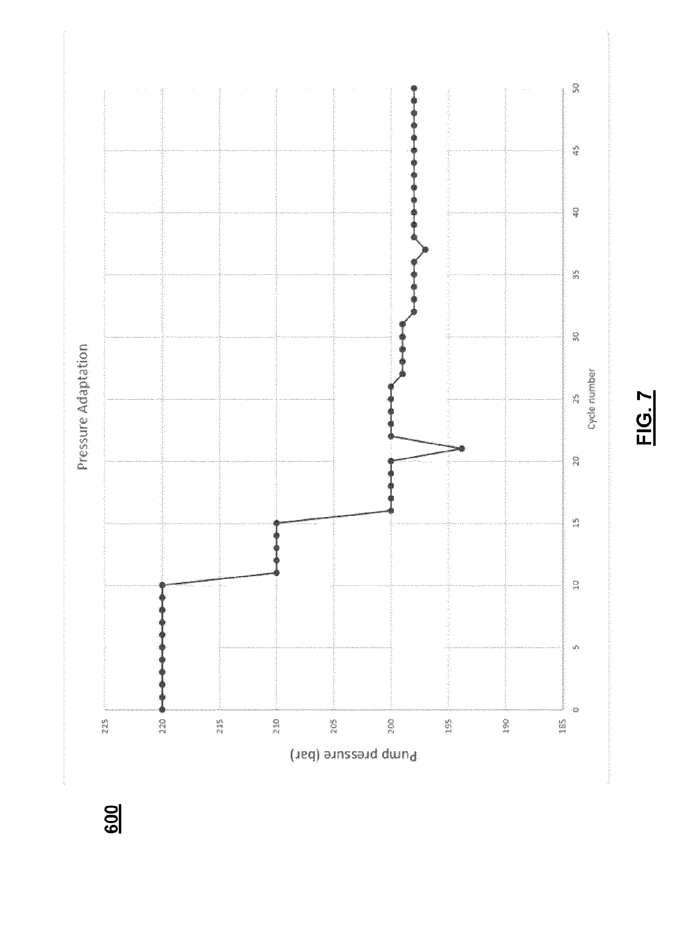

Referring now to FIG. 7, a graph of variable pressure setpoint over cycles in an example operation of the injection molding system 900 is shown at 600. In the graph 600, the y-axis is the variable pressure setpoint, measured in bar, and the x-axis is the number of completed cycles. Prior to cycle 1, the variable pressure setpoint is approximately 220.0 bar. In an example embodiment performing the process 1000, this represents the predetermined standard pressure value. At the predetermined standard pressure value, the variable pressure setpoint is lower than the preset maximum pressure setpoint, which is 230 bar in the example.

From cycle 1 to cycle 10, the pump assembly 110 operates for 10 cycles at a variable pressure setpoint of approximately 220.0 bar. In an example embodiment performing the process 1000, this represents the process 1000 iterating through step 1025 for the predetermined number of baseline cycles-here, 10 cycles.

During cycle 11, the variable pressure setpoint is decreased to approximately 210.0 bar. In an example embodiment performing the process 1000, this represents the process 1000 now proceeding through step 1030 and step 1075 within a single iteration. More specifically, at step 1030, the target pressure value is set to a value that is less than the predetermined standard pressure value. At step 1070, the controller 170 determines that the predetermined number of baseline cycles was completed with cycle 10, so at step 1075, it decreases the variable pressure setpoint to a value-here, approximately 210.0 bar-approaching the target pressure value. From cycle 11 to cycle 15, the pump assembly 110 operates for 5 cycles at the variable pressure setpoint of approximately 210.0 bar. In an example embodiment performing the process 1000, this represents the process 1000 proceeding from step 1075 as discussed above through step 1110, then iterating for 4 more cycles proceeding directly through step 1070 and step 1080 and not step 1075, for a total that is the predetermined number of stabilizing cycles-here, 5 cycles. During cycle 16, the variable pressure setpoint is decreased to approximately 200.0 bar. In an example embodiment performing the process 1000, this represents the process 1000 again proceeding through step 1030 and step 1075 within a single iteration. At step 1070, the controller 170 determines that the predetermined number of stabilizing cycles was completed with cycle 15, so at step 1075, it decreases the variable pressure setpoint to a value-here, approximately 200.0 bar-approaching the target pressure value.

From cycle 16 to cycle 20, the pump assembly 110 operates for 5 cycles at the variable pressure setpoint of approximately 200.0 bar. In an example embodiment performing the process 1000, this represents the process 1000 again proceeding from step 1075 as discussed above through step 1110, then iterating for 4 more cycles proceeding directly through step 1070 and step 1080 and not step 1075, for a total that is the predetermined number of stabilizing cycles.

During cycle 21, the variable pressure setpoint is decreased to approximately 193.8 bar. In an example embodiment performing the process 1000, this represents the process 1000 again proceeding through step 1030 and step 1075 within a single iteration. At step 1070, the controller 170 determines that the predetermined number of stabilizing cycles was completed with cycle 20, so at step 1075, it decreases the variable pressure setpoint to a value-here, approximately 193.8 bar-approaching the target pressure value.

During cycle 22, the variable pressure setpoint is increased to approximately 200.0 bar, representing an increase equal to the decrease that took place during cycle 21. In an example embodiment performing the process 1000, this represents the process 1000 proceeding through either or both of step 1045 and step 1055, and then through step 1065, within a single iteration. As a more specific example, this represents the process 1000 proceeding through step 1050, at which the controller 170 determines that the most recently measured ejector-forward time duration is greater than the ejector-forward time duration that was determined during baseline performance. Accordingly, the process 1000 proceeds directly through step 1055 and increases the target pressure value by an amount equal to the previous decrease. Within the same iteration, the process 1000 then proceeds through step 1060, where the controller 170 determines that the target pressure value is greater than the variable pressure setpoint, and then directly through step 1065, where the controller 170 increases the variable pressure setpoint to the target pressure value-here, approximately 200.0 bar. The target pressure is 190 bar in cycle 20, remains at 190 bar in cycle 21. At the end of cycle 21 and before starting cycle 22, the control detected an increase of cycle time or function step time, it rolled the pressure back to 200 bar by undoing the previous pressure drop. At the same time, the control also changes the target pressure to be the same as the pressure setpoint, 200 bar in this case. From cycle 22 to 26, since the cycle time is not affected due to higher pressure (200 bar) than the pressure used in cycle 21 (193.8 bar), the algorithm doesn't go through step 1055. The target pressure that is determined in step 1030 by the model remains at 190 bar (not revised higher). Due to another criteria that kicks in when step 1055 is triggered by the condition in 1050, the pressure drop described in step 1075 is limited by a small value of 1 bar. Note that in cycle 37, the cycle time is impacted again and the algorithm trigged step 1055 the second time. It is in this instance that the target pressure settles at 198 bar. From cycle 22 to cycle 42, the injection molding system 900 operates with similar behavior to that of cycle 10 to cycle 22 discussed above. In an example embodiment performing the process 1000, this represents the process 1000 proceeding through iterations of stabilizing cycles, one-cycle decreases in variable pressure setpoint, and a one-cycle increase in variable pressure setpoint offsetting the previous decrease.

During cycle 42, the variable pressure setpoint has essentially converged to the target pressure value. In an example embodiment performing the process 1000, this represents the process 1000 proceeding through step 1075, where the variable pressure setpoint is either equal or close enough to the target pressure value or that it does not decrease at step 1075. In an example embodiment where the minimum decrease in target pressure value must be approximately 1 bar, the variable pressure setpoint can be within 1 bar above the target pressure value.

After cycle 42, the pump assembly 110 operates for an indefinite number of cycles at the stabilized variable pressure setpoint-here, approximately 198.0 bar. In an example embodiment performing the process 1000, this will continue until an event causes a change in target pressure. The graph 600 thus demonstrates how, in one aspect of the present invention, decreases in the variable pressure setpoint gradually stabilize to an optimal value.

The invention is set out in the appended claims.

## Claims

1. A process (1000) of a controller (170) on a hydraulic system used as part of an injection molding system (900), the process comprising:
checking (1010) whether the injection molding system (900) is in production cycles;
if the injection molding system (900) is in production cycles, checking (1020) whether a predetermined number of baseline cycles have been completed;
if the predetermined number of baseline cycles have not been completed, operating (1025) a pump assembly (110) for the predetermined number of baseline cycles at a predetermined standard pressure value, and determining and logging (1026) the baseline performance of the injection molding system (900) based on measurements from one or more sensors;
if the predetermined number of baseline cycles have been completed, determining and setting (1030) a target pressure value which is less than the predetermined standard pressure value;
checking (1040) whether the pressure of one or more accumulator assemblies (118) is lower than a predetermined accumulator pressure limit;
if the accumulator pressure is lower than the predetermined accumulator pressure limit, increasing (1045) a variable pressure setpoint of the injection molding system (900) by an amount equal to the difference between the pressure of the one or more accumulator assemblies (118) and the predetermined accumulator pressure limit;
checking (1060) whether the target pressure value is greater than the variable pressure setpoint;
if the target pressure value is greater than the variable pressure setpoint, increasing (1065) the variable pressure setpoint to the target pressure value;
if the target pressure value is not greater than the variable pressure setpoint, checking (1070) whether a predetermined number of stabilizing cycles have been completed since the most recent decrease in the variable pressure setpoint;
if the predetermined number of stabilizing cycles have been completed, decreasing (1075) the variable pressure setpoint to a value approaching the target pressure value;
setting (1080) an updated value of the variable pressure setpoint, when applicable;
checking (1090) whether the variable pressure setpoint has been changed;
if the variable pressure setpoint has been changed, restart (1095) pressure adaptation and reestablish baseline performance by returning to the step of checking (1020) whether a predetermined number of baseline cycles have been completed; and
if the variable pressure setpoint has not been changed, operating (1110) the injection molding system (900) at the variable pressure setpoint.

2. The process of claim 1, wherein the target pressure value is not small enough to result in a deviation from the determined baseline performance.

3. The process of claim 1 comprising checking (1050), after checking (1040) whether the pressure of one or more accumulator assemblies (118) is lower than a predetermined accumulator pressure limit, whether a function time duration is longer than a corresponding baseline function time duration and, if it is, increasing (1055) the target pressure value to the variable pressure setpoint.

4. The process of claim 3, wherein if the variable pressure setpoint has not been changed upon checking (1090), checking (1100), before operating (1110) the injection molding system (900) at the variable pressure setpoint, whether a hold/cooling time duration has decreased and if it has, increasing (1105) the variable pressure setpoint to compensate for the decrease in accumulator pressure charging time duration.

5. The process of any preceding claim, wherein determining and setting (1030) a target pressure value which is less than the predetermined standard pressure value comprises setting the target pressure value to the highest value among the lower limits of pressure value imposed by one or more functions of the injection molding system (900).

6. The process of claim 5, wherein the lower limit of pressure value is determined, for at least one of the one or more functions, based on mathematical modelling of its mechanical characteristics to estimate the minimum pressure required to deliver performance of those functions.

7. The process of claim 5, wherein the lower limit of pressure value is determined, for at least one of the one or more functions, based on measurement of its mechanical characteristics.

8. The process of claim 6 or claim 7, wherein the mechanical characteristic includes at least one of: force, pressure, acceleration, and velocity.

9. The process of any preceding claim, wherein the baseline performance includes the time durations of one or more of the following functions: mold closing, mold opening, clamp-up, unclamp, and/or ejector-forward.

10. The process of any preceding claim, wherein decreasing (1075) the variable pressure setpoint to a value approaching the target pressure value comprises a decrease in the variable pressure setpoint equal, or approximately equal, to a predetermined percentage of the difference between the variable pressure setpoint and the target pressure value.

11. The process of claim 10, wherein decreasing (1075) the variable pressure setpoint to a value approaching the target pressure value comprises a decrease in the variable pressure setpoint limited such that it is within, or approximately within, a predetermined bound of pressure values.

12. An injection molding system (900) comprising a controller (170) and a hydraulic system, the hydraulic system comprising a pump assembly (110), one or more sensors and one or more accumulator assemblies (118), **characterised in that** the controller (170) is operable to carry out the method of any preceding claim.

## Patentansprüche

1. Prozess (1000) einer Steuervorrichtung (170) an einem Hydrauliksystem, das als Teil eines Spritzgießsystems (900) verwendet wird, wobei der Prozess Folgendes umfasst:
Überprüfen (1010), ob sich das Spritzgießsystem (900) in Produktionszyklen befindet;
wenn sich das Spritzgießsystem (900) in Produktionszyklen befindet, Überprüfen (1020), ob eine vorbestimmte Anzahl von Grundlinienzyklen abgeschlossen wurde;
wenn die vorbestimmte Anzahl von Grundlinienzyklen nicht abgeschlossen wurde, Betreiben (1025) einer Pumpenbaugruppe (110) für die vorbestimmte Anzahl von Grundlinienzyklen bei einem vorbestimmten Standarddruckwert und Bestimmen und Protokollieren (1026) der Grundlinienleistung des Spritzgießsystems (900) auf Grundlage von Messungen von einem oder mehreren Sensoren;
wenn die vorbestimmte Anzahl von Grundlinienzyklen abgeschlossen wurde, Bestimmen und Festlegen (1030) eines Zieldruckwerts, der kleiner als der vorbestimmte Standarddruckwert ist;
Überprüfen (1040), ob der Druck einer oder mehrerer Akkumulatorbaugruppen (118) niedriger ist als eine vorbestimmte Akkumulatordruckgrenze;
wenn der Akkumulatordruck niedriger ist als die vorbestimmte Akkumulatordruckgrenze, Erhöhen (1045) eines variablen Drucksollwerts des Spritzgießsystems (900) um ein Ausmaß, das der Differenz zwischen dem Druck der einen oder mehreren Akkumulatorbaugruppen (118) und der vorbestimmten Akkumulatordruckgrenze entspricht;
Überprüfen (1060), ob der Zieldruckwert größer als der variable Drucksollwert ist;
wenn der Zieldruckwert größer als der variable Drucksollwert ist, Erhöhen (1065) des variablen Drucksollwerts auf den Zieldruckwert;
wenn der Zieldruckwert nicht größer als der variable Drucksollwert ist, Überprüfen (1070), ob seit der letzten Verringerung des variablen Drucksollwerts eine vorbestimmte Anzahl von Stabilisierungszyklen abgeschlossen wurde;
wenn die vorbestimmte Anzahl von Stabilisierungszyklen abgeschlossen wurde, Verringern (1075) des variablen Drucksollwerts auf einen Wert, der sich dem Zieldruckwert annähert;
Einstellen (1080) eines aktualisierten Werts des variablen Drucksollwerts, falls zutreffend;
Überprüfen (1090), ob der variable Drucksollwert geändert wurde;
wenn der variable Drucksollwert geändert wurde, erneutes Starten (1095) der Druckanpassung und Wiederherstellen der Grundlinienleistung durch Zurückkehren zum Schritt des Überprüfens (1020), ob eine vorbestimmte Anzahl von Grundlinienzyklen abgeschlossen wurde; und
wenn der variable Drucksollwert nicht geändert wurde, Betreiben (1110) des Spritzgießsystems (900) bei dem der variablen Drucksollwert.

2. Prozess nach Anspruch 1, wobei der Zieldruckwert nicht so klein ist, dass er zu einer Abweichung von der bestimmten Grundlinienleistung führt.

3. Prozess nach Anspruch 1, umfassend Überprüfen (1050), nachdem überprüft (1040) wurde, ob der Druck einer oder mehrerer Akkumulatorbaugruppen (118) niedriger als eine vorbestimmte Akkumulatordruckgrenze ist, ob eine Funktionszeitdauer länger als eine entsprechende Grundlinienfunktionszeitdauer ist und, falls dies der Fall ist, Erhöhen (1055) des Zieldruckwerts auf den variablen Drucksollwert.

4. Prozess nach Anspruch 3, wobei, wenn der variable Drucksollwert bei der Überprüfung (1090) nicht geändert wurde, Überprüfen (1100) vor dem Betrieb (1110) des Spritzgießsystems (900) bei dem variablen Drucksollwert, ob sich eine Halte-/Kühlzeitdauer verkürzt hat, und falls dies der Fall ist, Erhöhen (1105) des variablen Drucksollwerts, um die Verkürzung der Akkumulatordruck-Ladezeitdauer auszugleichen.

5. Prozess nach einem vorstehenden Anspruch, wobei das Bestimmen und Einstellen (1030) eines Zieldruckwerts, der kleiner als der vorbestimmte Standarddruckwert ist, umfasst, den Zieldruckwert auf den höchsten Wert unter den unteren Grenzen des Druckwerts einzustellen, die durch eine oder mehrere Funktionen des Spritzgießsystems (900) vorgegeben sind.

6. Prozess nach Anspruch 5, wobei die untere Grenze des Druckwerts für mindestens eine der einen oder mehreren Funktionen auf der Grundlage einer mathematischen Modellierung ihrer mechanischen Eigenschaften bestimmt wird, um den Mindestdruck zu schätzen, der zur Erbringung der Leistung dieser Funktionen erforderlich ist.

7. Prozess nach Anspruch 5, wobei die untere Grenze des Druckwertes für mindestens eine der einen oder mehreren Funktionen auf Grundlage der Messung ihrer mechanischen Eigenschaften bestimmt wird.

8. Prozess nach Anspruch 6 oder Anspruch 7, wobei die mechanische Eigenschaft mindestens eines einschließt von: Kraft, Druck, Beschleunigung und Geschwindigkeit.

9. Prozess nach einem vorstehenden Anspruch, wobei die Grundlinienleistung die Zeitdauer einer oder mehrerer der folgenden Funktionen einschließt: Schließen der Form, Öffnen der Form, Spannen, Lösen und/oder Auswerfer vorwärts.

10. Prozess nach einem vorstehenden Anspruch, wobei Verringern (1075) des variablen Drucksollwerts auf einen Wert, der sich dem Zieldruckwert annähert, eine Verringerung des variablen Drucksollwerts um einen vorbestimmten Prozentsatz oder ungefähr einen vorbestimmten Prozentsatz der Differenz zwischen dem variablen Drucksollwert und dem Zieldruckwert umfasst.

11. Prozess nach Anspruch 10, wobei das Verringern (1075) des variablen Drucksollwerts auf einen Wert, der sich dem Zieldruckwert annähert, eine Verringerung des Sollwerts des variablen Drucksollwerts umfasst, die so begrenzt ist, dass er innerhalb oder ungefähr innerhalb eines vorbestimmten Grenzwerts von Druckwerten liegt.

12. Spritzgießsystem (900), das eine Steuervorrichtung (170) und ein Hydrauliksystem umfasst, wobei das Hydrauliksystem eine Pumpenbaugruppe (110), einen oder mehrere Sensoren und eine oder mehrere Akkumulatorbaugruppen (118) umfasst, **dadurch gekennzeichnet, dass** die Steuervorrichtung (170) zur Durchführung des Verfahrens nach einem vorstehenden Anspruch betriebsfähig ist.

## Revendications

1. Processus (1000) d'un contrôleur (170) sur un système hydraulique utilisé comme partie d'un système de moulage par injection (900), le processus comprenant :
la vérification (1010) si le système de moulage par injection (900) est en cycles de production ;
si le système de moulage par injection (900) est en cycles de production, la vérification (1020) si un nombre prédéterminé de cycles de base a été effectué ;
si le nombre prédéterminé de cycles de base n'a pas été effectué, le fonctionnement (1025) d'un ensemble de pompe (110) pendant le nombre prédéterminé de cycles de base à une valeur de pression standard prédéterminée, et la détermination et l'enregistrement (1026) de la performance de base du système de moulage par injection (900) sur la base des mesures d'un ou plusieurs capteurs ;
si le nombre prédéterminé de cycles de base a été effectué, la détermination et le réglage (1030) d'une valeur de pression cible qui est inférieure à la valeur de pression standard prédéterminée ;
la vérification (1040) si la pression d'un ou de plusieurs ensembles d'accumulateurs (118) est inférieure à une limite de pression d'accumulateur prédéterminée ;
si la pression d'accumulateur est inférieure à la limite de pression d'accumulateur prédéterminée, l'augmentation (1045) d'un point de consigne de pression variable du système de moulage par injection (900) d'une valeur égale à la différence entre la pression du ou des ensembles d'accumulateurs (118) et la limite de pression prédéterminée d'accumulateur ;
la vérification (1060) si la valeur de pression cible est supérieure au point de consigne de pression variable ;
si la valeur de pression cible est supérieure au point de consigne de pression variable, l'augmentation (1065) du point de consigne de pression variable à la valeur de pression cible ;
si la valeur de pression cible n'est pas supérieure au point de consigne de pression variable, la vérification (1070) si un nombre prédéterminé de cycles de stabilisation a été effectué depuis la dernière diminution du point de consigne de pression variable ;
si le nombre prédéterminé de cycles de stabilisation a été effectué, la diminution (1075) du point de consigne de pression variable à une valeur se rapprochant de la valeur de pression cible ;
le réglage (1080) d'une valeur mise à jour du point de consigne de pression variable, le cas échéant ;
la vérification (1090) si le point de consigne de pression variable a été modifié ;
si le point de consigne de pression variable a été modifié, le redémarrage (1095) de l'adaptation de la pression et le rétablissement de la performance de base en revenant à l'étape de vérification (1020) si un nombre prédéterminé de cycles de base a été effectué ; et
si le point de consigne de pression variable n'a pas été modifié, le fonctionnement (1110) du système de moulage par injection (900) au point de consigne de pression variable.

2. Processus selon la revendication 1, dans lequel la valeur de pression cible n'est pas suffisamment petite pour entraîner un écart par rapport à la performance de base déterminée.

3. Processus selon la revendication 1, comprenant la vérification (1050), après la vérification (1040) si la pression d'un ou de plusieurs ensembles d'accumulateurs (118) est inférieure à une limite de pression d'accumulateur prédéterminée, si la durée d'une fonction est plus longue que la durée d'une fonction de base correspondante et, si c'est le cas, augmentation (1055) de la valeur de pression cible jusqu'au point de consigne de pression variable.

4. Processus selon la revendication 3, dans lequel si le point de consigne de pression variable n'a pas été modifiée lors de la vérification (1090), vérification (1100), avant le fonctionnement (1110) du système de moulage par injection (900) au point de consigne de pression variable, si une durée de maintien/refroidissement a diminué et, si c'est le cas, augmentation (1105) du point de consigne de pression variable pour compenser la diminution de la durée de charge de la pression d'accumulateur.

5. Processus selon une quelconque revendication précédente, dans lequel la détermination et le réglage (1030) d'une valeur de pression cible qui est inférieure à la valeur de pression standard prédéterminée comprennent le réglage de la valeur de pression cible à la valeur la plus élevée parmi les limites inférieures de la valeur de pression imposées par une ou plusieurs fonctions du système de moulage par injection (900).

6. Processus selon la revendication 5, dans lequel la limite inférieure de la valeur de pression est déterminée, pour au moins une des une ou plusieurs fonctions, sur la base d'une modélisation mathématique de ses caractéristiques mécaniques afin d'estimer la pression minimale requise pour assurer la performance de ces fonctions.

7. Processus selon la revendication 5, dans lequel la limite inférieure de la valeur de pression est déterminée, pour au moins une des une ou plusieurs fonctions, sur la base de la mesure de ses caractéristiques mécaniques.

8. Processus selon la revendication 6 ou la revendication 7, dans lequel la caractéristique mécanique inclut au moins une des suivantes : force, pression, accélération et vitesse.

9. Processus selon une quelconque revendication précédente, dans lequel la performance de base inclut les durées d'une ou plusieurs des fonctions suivantes : fermeture du moule, ouverture du moule, serrage, desserrage, et/ou éjecteur vers l'avant.

10. Processus selon une quelconque revendication précédente, dans lequel la diminution (1075) du point de consigne de pression variable à une valeur approchant la valeur de pression cible comprend une diminution du point de consigne de pression variable égale ou approximativement égale à un pourcentage prédéterminé de la différence entre le point de consigne de pression variable et la valeur de pression cible.

11. Processus selon la revendication 10, dans lequel la diminution (1075) du point de consigne de pression variable à une valeur approchant la valeur de pression cible comprend une diminution du point de consigne de pression variable limitée de telle sorte qu'elle se situe dans, ou approximativement dans, une limite prédéterminée de valeurs de pression.

12. Système de moulage par injection (900) comprenant un contrôleur (170) et un système hydraulique, le système hydraulique comprenant un ensemble de pompe (110), un ou plusieurs capteurs et un ou plusieurs ensembles d'accumulateurs (118), **caractérisé en ce que** le contrôleur (170) est capable de mettre en œuvre le procédé selon une quelconque revendication précédente.
